# EUROPÄISCHE PATENTSCHRIFT

(11) **EP 3 234 586 B1**
(45) Veröffentlichungstag und Bekanntmachung des Hinweises auf die Patenterteilung: **24.04.2019**
(21) Anmeldenummer: 15804430.5
(22) Anmeldetag: 02.12.2015
(51) Int. Cl.: G01N 30/20, G01N 30/46, G01N 30/40, F16K 11/02, G01N 30/02

(54) **GASCHROMATOGRAPH UND MEHRWEGEVENTILEINHEIT FÜR EINEN GASCHROMATOGRAPHEN**
GAS CHROMATOGRAPH AND MULTIPORT VALVE UNIT FOR A GAS CHROMATOGRAPH
CHROMATOGRAPHE À PHASE GAZEUSE ET UNITÉ DE VANNE À PLUSIEURS VOIES POUR CHROMATOGRAPHE À PHASE GAZEUSE

(30) Priorität: 18.12.2014 DE 102014226481
(43) Veröffentlichungstag der Anmeldung: 25.10.2017
(73) Patentinhaber: Siemens Aktiengesellschaft, 80333 München (DE)
(72) Erfinder: RICHTER, Josef, 76185 Karlsruhe (DE); STRAUCH, Piotr, 76761 Rülzheim (DE)
(86) Internationale Anmeldenummer: PCT/EP2015/078310
(87) Internationale Veröffentlichungsnummer: WO 2016/096423

(56) Entgegenhaltungen:
- EP-B1- 0 400 016
- WO-A1-2010/066571
- AU-A- 1 386 976
- US-A1- 2004 234 414
- US-A1- 2006 185 419

## Beschreibung

Die Erfindung betrifft eine Mehrwegeventileinheit für einen Gaschromatographen.

Die Erfindung betrifft ferner einen Gaschromatographen mit einer Mehrwegeventileinheit.

Aus der US 6,453,725 B1 oder der der US 2004/0234414 A1 ist ein Gaschromatograph mit einer Mehrwegeventileinheit zur Umschaltung zwischen einer Dosierung einer Probe und einer Aufgabe der dosierten Probe auf zwei chromatographische Trenneinrichtungen bekannt, denen ein einziger oder jeweils ein Detektor nachgeordnet ist. Die Mehrwegeventileinheit besteht aus zehn steuerbaren Ventilen, die in Reihe geschaltet sind und je nach Ansteuerung geöffnet oder geschlossen sind. Dabei werden jeweils unmittelbar benachbarte Ventile der Reihenschaltung unterschiedlich angesteuert, so dass die Mehrwegeventileinheit zwei unterschiedliche Schaltstellungen aufweist, in denen jedes zweite Ventil entweder geschlossen oder geöffnet ist.

Am Anfang und Ende der Reihenschaltung sowie an den unterschiedlichen Verbindungsstellen der benachbarten Ventile sind eine Probenzuleitung, eine Probenableitung, ein Einlass und ein Auslass eines Dosiervolumens, eine erste Trenneinrichtung mit ggf. nachgeordnetem Detektor, eine zweite Trenneinrichtung mit nachgeordnetem Detektor, ein Gaseinlass für ein Trägergas und ein Gasauslass in der Weise angeschlossen, dass in einer ersten Schaltstellung der Mehrwegeventileinheit eine aus einem technischen Prozess entnommene Probe in einem kontinuierlichen Strom durch das Dosiervolumen geleitet wird, während gleichzeitig die erste Trenneinrichtung mit dem ggf. nachgeordneten Detektor rückwärts und parallel dazu die zweite Trenneinrichtung mit dem nachgeordneten Detektor in Vorwärtsrichtung mit dem Trägergas gespült werden. In einer zweiten Schaltstellung der Mehrwegeventileinheit wird die in dem Dosiervolumen enthaltene Probenmenge mittels des Trägergases nacheinander durch die erste und die zweite Trenneinrichtung geführt und dabei in unterschiedliche Probenbestandteile zerlegt, die mit dem Detektor bzw. den Detektoren detektiert werden. Gleichzeitig wird der Probenstrom an dem Dosiervolumen vorbeigeleitet.

Die US 2002/0131905 A1 offenbart eine Modifikation der zuvor beschriebenen Mehrwegeventileinheit, die zwischen der ersten Schaltstellung, in der die Probe durch das Dosiervolumen geleitet wird, und der zweiten Schaltstellung, in der die Probe aus dem Dosiervolumen in eine Trenneinrichtung geführt wird, eine weitere Schaltstellung einnimmt, in der das Dosiervolumen kurzzeitig von der Probenzuleitung getrennt wird, um eine Anpassung des Druckes in dem Dosiervolumen an den Außendruck zu ermöglichen.

Die Mehrwegeventileinheit des aus der US 6,453,725 B1 bekannten Gaschromatographen weist ein Oberteil, ein Unterteil und ein plattenförmiges Mittelteil auf, das unter Zwischenlage einer ersten Membran mit dem Oberteil und unter Zwischenlage einer zweiten Membran mit dem Unterteil verbunden ist. Das Oberteil enthält in seiner an der ersten Membran anliegenden Körperfläche fünf Mulden, in die über eine erste Steuerleitung Steuerluft einleitbar ist. Das Unterteil enthält in seiner an der zweiten Membran anliegenden Körperfläche weitere fünf Mulden, in die über eine zweite Steuerleitung Steuerluft einleitbar ist. Das Mittelteil enthält auf seiner an der ersten Membran anliegenden Oberseite und auf seiner an der zweiten Membran anliegenden Unterseite in den den zehn Mulden gegenüberliegenden Bereichen jeweils ein Paar von Löchern, wobei jedes Paar von Löchern Fluidanschlüsse jeweils eines der zehn Ventile bildet. Bei Einleitung von Steuerluft in die fünf Mulden des Oberteils verschließt die erste Membran die jeweils gegenüberliegenden Löcher in dem Mittelteil und die fünf Ventile sind geschlossen. Gleichzeitig weicht bei nicht vorhandener Steuerluft in den weiteren fünf Mulden des Unterteils die zweite Membran unter Freigabe der ihr gegenüberliegenden Löcher in die weiteren fünf Mulden zurück und die weiteren fünf Ventile sind geöffnet. Die Steuerluft wird abwechselnd in die fünf Mulden des Oberteils und die weiteren fünf Mulden des Unterteils eingeleitet, so dass die fünf Ventile und die weiteren fünf Ventile abwechselnd öffnen und schließen. In dem Mittelteil sind Fluidkanäle ausgebildet, die Löcher auf der Oberseite des Mittelteils mit Löchern auf der Unterseite verbinden und so die fünf Ventile und die weiteren fünf Ventile abwechselnd in Reihe schalten. Weiterhin führen die Fluidkanäle zu externen Anschlüssen, die an dem Mittelteil montiert sind und zum Anschluss der unterschiedlichen Komponenten des Gaschromatographen an die Mehrwegeventileinheit dienen.

Aufgrund von Totvolumina der Fluidkanäle in dem Mittelteil der bekannten Mehrwegeventileinheit kann ihre Verwendung in bestimmten Applikationen eingeschränkt sein. So wird, wie oben bereits erwähnt, in der ersten Schaltstellung der Mehrwegeventileinheit die aus dem technischen Prozess entnommene Probe über eines der zehn Ventile durch das Dosiervolumen geleitet und in der zweiten Schaltstellung über ein anderes Ventil mittels des Trägergases aus dem Dosiervolumen in die chromatographischen Trenneinrichtungen überführt. Zum Umschaltzeitpunkt ist ein das Totvolumen bildender Teil des Fluidkanals zwischen den beteiligten Ventilen mit der Probe gefüllt, die anschließend aus dem Totvolumen in das Trägergas eindiffundiert, was zu einer unscharfen Injektion der Probe in den Trägergasstrom verbunden mit einer Verringerung der Auflösung der nachfolgenden chromatographischen Trennung führt.

Die WO 2007/028130 A2 zeigt einen sehr ähnlichen Gaschromatographen der ebenfalls eine aus zehn steuerbaren Ventilen in Reihenschaltung bestehende Mehrwegeventileinheit aufweist, die zur Probendosierung und Umschaltung zwischen zwei chromatographischen Trenneinrichtungen dient. Auch hier werden jeweils unmittelbar benachbarte Ventile der Reihenschaltung unterschiedlich angesteuert, so dass die Mehrwegeventileinheit zwei unterschiedliche Schaltstellungen aufweist, in denen jedes zweite Ventil entweder geschlossen oder geöffnet ist. Im Unterschied zu dem aus der US 6,453,725 B1 bekannten Gaschromatographen werden in der ersten Schaltstellung der Mehrwegeventileinheit beide Trenneinrichtungen rückwärts mit dem Trägergas gespült.

Die Mehrwegeventileinheiten der aus der US 2004/0234414 A1 und der WO 2007/028130 A2 bekannten Gaschromatographen unterscheiden sich in ihrem Aufbau von der aus der US 6,453,725 B1, da sie jeweils nur eine Membran aufweisen und alle zur Einleitung der Steuerluft dienenden zehn Mulden gemeinsam in einem Bauteil ausgebildet sind, das mit seiner die Mulden enthaltenden Körperfläche an einer Seite der Membran anliegt. Dementsprechend sind auch die Löcherpaare, die die Fluidanschlüsse der einzelnen Ventile bilden, gemeinsam in einem weiteren Bauteil ausgebildet, das mit seiner die Löcherpaare enthaltenden Seite an der anderen Seite der Membran anliegt. In dem weiteren Bauteil sind Fluidkanäle in V-förmiger Anordnung ausgebildet, die die jeweils benachbarten Löcherpaare verbinden und so die zehn Ventile in Reihe schalten. Weiterhin führen die Fluidkanäle zu externen Anschlüssen, die zum Anschluss der unterschiedlichen Komponenten des Gaschromatographen an die Mehrwegeventileinheit dienen. Auch hier ergeben sich aufgrund der Totvolumina der Fluidkanäle die oben erläuterten Einschränkungen bzw. Probleme in Bezug auf die Injektion der Probe in den Trägergasstrom.

Aus der EP 0 400 016 B1 ist eine Mehrwegeventileinheit mit einem scheibenförmigen Unterteil bekannt, in dem in einer Außenfläche für jedes Ventil jeweils eine Mulde ausgebildet ist, in die über eine individuelle Steuerleitung Steuerluft einleitbar ist. An der Außenfläche des Unterteils mit den Mulden liegt eine Membran an. Die Mulden können auch in einem scheibenförmigen Oberteil oder Zwischenteil ausgebildet sein, das auf der gegenüberliegenden Seite an der Membran anliegt.

Im Falle des Zwischenteils enthält dieses in die Mulden mündende Löcherpaare, wobei jedes Paar von Löchern Fluidanschlüsse jeweils eines der Ventile bildet. Auf ihrer von der Membran abgewandten Seite enthält das Zwischenteil Rinnen, welche von einem aufliegenden Oberteil abgedeckt werden und die Fluidanschlüsse von in Reihe geschalteten Ventilen miteinander verbinden und/oder von den Fluidanschlüssen zu vorgegebenen Stellen führen, an denen sie über Bohrungen in dem Oberteil mit externen Anschlüssen verbunden sind.

Die AU 1386976 A zeigt eine Mehrwegeventileinheit, die ebenfalls aus einem scheibenförmigen, mit Mulden versehenen Unterteil, einer Membran, einem Zwischenteil und einem scheibenförmigen Oberteil besteht, das auf dem Zwischenteil unter Zwischenlage einer Dichtungsfolie liegt. Allerdings umfasst das Zwischenteil keine Rinnen, sondern Fluidkanäle in V-förmiger Anordnung ähnlich denen aus der oben genannten US 2004/0234414 A1 oder WO 2007/028130 A2.

Um bei einem Gaschromatographen eine scharfe Probendosierung zu erreichen, ist es zum Beispiel aus der WO 2010/066571 A1 bekannt, die von dem Trägergas aus dem Dosiervolumen herausgeführte Probenmenge einem ventillos arbeitenden Injektor zuzuführen, der aus dieser Probenmenge einen Teil abgezweigt und als scharf begrenzten Probenpfropf in die Trenneinrichtungen eingeschleust. Weiterhin ist zwischen der ersten Trenneinrichtung mit dem nachgeordneten ersten Detektor und der zweiten Trenneinrichtung mit dem nachgeordneten zweiten Detektor eine ebenfalls ventillos arbeitende Umschalteinrichtung vorgesehen, um Probenbestandteile, die am Ende der ersten Trenneinrichtung noch nicht ausreichend getrennt sind, in die zweite Trenneinrichtung zu überführen, und Probenbestandteile, die am Ende der ersten Trenneinrichtung bereits ausreichend getrennt und detektiert worden sind, von der zweiten Trenneinrichtung fernzuhalten (sog. Heart-Cut-Technik). Über steuerbare Ventile kann die erste Trenneinrichtung aus einem Hilfsgasweg der Umschalteinrichtung mit dem Trägergas rückgespült werden (sog. Backflush). Die Steuerung des Injektors und der Umschalteinrichtung erfolgt über Druckdifferenzen in den Gaswegen, was eine genaue Druckregelung und Einstellung der Druckabfälle mittels Strömungswiderständen erforderlich macht. Außerdem benötigt die Umschalteinrichtung eine Hilfsgasversorgung, was mit einem entsprechend hohen Trägergasverbrauch verbunden ist.

Aus der US 2006/185419 A1, insbes. Figuren 14 und 15, ist ein Gaschromatograph mit einer aus zehn steuerbaren Ventilen bestehenden Mehrwegeventileinheit bekannt, bei der sechs Ventile (3-1, 1-2; 9-8, 8-7; 4-5, 5-6) in einer ersten Reihenschaltung und vier Ventile (11-10, 10-12; 13-15, 15-14) in einer zweiten Reihenschaltung angeordnet sind. Die erste Ventil-Reihenschaltung dient dazu, in einer ersten Schaltstellung der Mehrwegeventileinheit eine aus einem technischen Prozess entnommene Probe in einem kontinuierlichen Strom durch ein Dosiervolumen zu leiten, während gleichzeitig eine erste Trenneinrichtung und eine hinter ihr liegende zweite Trenneinrichtung mit einem nachgeordneten Detektor in Vorwärtsrichtung mit einem Trägergas gespült werden. In einer zweiten Schaltstellung der Mehrwegeventileinheit wird der Probenstrom an dem Dosiervolumen vorbeigeleitet und die in dem Dosiervolumen enthaltene Probenmenge mittels des Trägergases in die Trenneinrichtungen geleitet. Nach Zurückschalten in die erste Schaltstellung wird die dosierte Probenmenge nacheinander durch die erste und die zweite Trenneinrichtung geführt und anschließend mit dem Detektor detektiert. Die zweite Ventil-Reihenschaltung bildet eine Umschalteinrichtung zwischen den beiden Trenneinrichtungen zur Durchführung eines Heart-Cut (dritte Schaltstellung). Die Anordnung der zehn Ventile ermöglicht keine Rückspülung der ersten Trenneinrichtung.

Der Erfindung liegt die Aufgabe zugrunde, eine alternative Bauform für eine Mehrwegeventileinheit anzugeben, um bei einem Gaschromatographen Probendosierung und Trennsäulenumschaltung sowie ggf. Trennsäulen-Rückspülung zu ermöglichen.

Gemäß der Erfindung wird die Aufgabe durch die in Anspruch 1 angegebene Mehrwegeventileinheit gelöst.

Ferner wird die Aufgabe durch den in Anspruch 3 angegebenen Gaschromatographen mit Mehrwegeventileinheit gelöst.

Vorteilhafte Weiterbildungen der erfindungsgemäßen Mehrwegeventileinheit und des Gaschromatographen sind in den Unteransprüchen angegeben.

Zur weiteren Erläuterung der Erfindung und ihrer Vorteile wird im Folgenden auf die Figuren der Zeichnung Bezug genommen; im Einzelnen zeigen die
- Figuren 1 bis 4: ein Ausführungsbeispiel des erfindungsgemäßen Gaschromatographen mit einer aus zehn Ventilen bestehenden Mehrwegeventileinheit in vier unterschiedlichen Schaltstellungen,
- Figur 5: ein Beispiel für die Mehrwegeventileinheit mit den daran angeschlossenen unterschiedlichen Komponenten des Gaschromatographen,
- Figur 6: beispielhaft einzelne Bestandteile der Mehrwegeventileinheit in Draufsicht,
- Figur 7: ein Beispiel der Mehrwegeventileinheit in Schnittdarstellung und
- Figur 8: eine Einzelheit der Mehrwegeventileinheit ebenfalls in Schnittdarstellung.

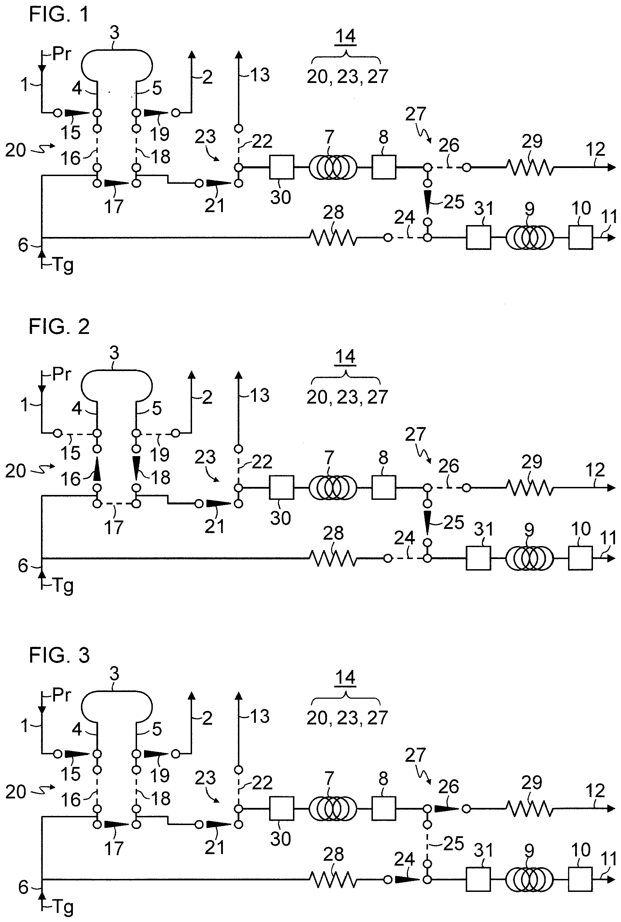

Die Figuren 1 bis 4 zeigen jeweils in beispielhafter schematischer Darstellung ein Blockschaltbild eines Gaschromatographen mit einer Probenzuleitung 1 und einer Probenableitung 2, einem Dosiervolumen 3 in Form einer Dosierschleife mit einem Einlass 4 und einem Auslass 5, einer Trägergaszuleitung 6, einer ersten Trenneinrichtung 7 mit einem nachgeschalteten ersten Detektor 8, einer zweiten Trenneinrichtung 9 mit einem nachgeschalteten zweiten Detektor 10, einem ersten, zweiten und dritten Gasauslass 11, 12, 13, und einer Mehrwegeventileinheit 14 bestehend aus einem ersten Ventil 15, einem zweiten Ventil 16, einem dritten Ventil 17, einem vierten Ventil 18 und einem fünften Ventil 19 in einer ersten Reihenschaltung 20, einem sechsten Ventil 21 und einem siebten Ventil 22 in einer zweiten Reihenschaltung 23 und einem achten Ventil 24, einem neunten Ventil 25 und einem zehnten Ventil 26 in einer dritten Reihenschaltung 27.

Die Probenzuleitung 1 ist an dem Anfang und die Probenableitung 2 an dem Ende der ersten Reihenschaltung 20 angeschlossen. Der Einlass 4 des Dosiervolumens 3 ist an der Verbindung zwischen dem ersten und zweiten Ventil 15, 16 und der Auslass 5 des Dosiervolumens 3 an der Verbindung zwischen dem vierten und fünften Ventil 18, 19 angeschlossen. Die Trägergaszuleitung 6 ist an der Verbindung zwischen dem zweiten und dritten Ventil 16, 17 angeschlossen und ferner über einen Strömungswiderstand 28 mit dem Anfang der dritten Reihenschaltung 27 verbunden. Das Ende der dritten Reihenschaltung 27 ist über einen weiteren Strömungswiderstand 29 mit dem zweiten Gasauslass 12 verbunden. Der Anfang der zweiten Reihenschaltung 23 ist an der Verbindung zwischen dem dritten und vierten Ventil 17, 18 und das Ende der zweiten Reihenschaltung 23 an dem dritten Gasauslass 13 angeschlossen. Die erste Trenneinrichtung 7 mit dem ersten Detektor 8 ist zwischen der Verbindung zwischen dem sechsten und siebten Ventil 21, 22 und der Verbindung zwischen dem neunten und zehnten Ventil 25, 26 angeordnet. Die zweite Trenneinrichtung 9 mit dem zweiten Detektor 10 ist zwischen der Verbindung des achten und neunten Ventils 24, 25 und dem ersten Gasauslass 11 angeordnet.

Der ersten Trenneinrichtung 7 und der zweiten Trenneinrichtung 9 ist jeweils ein zusätzlicher Detektor 30, 31 unmittelbar vorgeschaltet. Bei den Detektoren 8, 10, 30, 31 handelt es sich vorzugsweise um Wärmeleitfähigkeitsdetektoren, die auf Substanzen mit unterschiedlicher thermischer Leitfähigkeit als das verwendete Trägergas ansprechen und so zerstörungsfrei detektieren.

Die Ventile 15-19, 21, 22 werden derart angesteuert bzw. sind derart ansteuerbar, dass innerhalb der ersten Reihenschaltung 20 und innerhalb der zweiten Reihenschaltung 23 jedes zweite Ventil entweder geschlossen oder geöffnet ist. Das heißt, dass bei geschlossenen Ventilen 15, 17, 19 der ersten Reihenschaltung 20 die Ventile 16, 18 geöffnet sind (und umgekehrt) und dass bei geschlossenem Ventil 21 der zweiten Reihenschaltung 23 das Ventil 22 geöffnet ist (und umgekehrt). Die Ventile 24, 25, 26 der dritten Reihenschaltung 27 sind dagegen unabhängig voneinander steuerbar.

Figur 1 zeigt den Gaschromatographen mit der Mehrwegeventileinheit 14 in einer ersten Schaltstellung, in der die Ventile 15, 17, 19, 21, 25 geöffnet und die übrigen Ventile 16, 18, 22, 24, 26 geschlossen sind. In dieser ersten Schaltstellung wird eine aus einem technischen Prozess entnommene Probe Pr über die Probenzuleitung 1 in einem kontinuierlichen Strom durch das Dosiervolumen 3 geleitet und anschließend über die Probenableitung 2 entsorgt oder in den Prozess zurückgeführt. Gleichzeitig werden die erste Trenneinrichtung 7 und die zugehörigen Detektoren 8, 30 und anschließend die zweite Trenneinrichtung 9 und die zugehörigen Detektoren 10, 31 mit einem Trägergas Tg gespült, das über die Trägergaszuleitung 6 zugeführt und über den ersten Gasauslass 11 entsorgt wird.

Zur Dosierung einer vorgegebenen Probenmenge aus dem Dosiervolumen 3 in den Trägergasstrom wird die Mehrwegeventileinheit 14 durch Umschalten der Ventile 15-19 der ersten Reihenschaltung 20 kurzzeitig in eine in Figur 2 gezeigte zweite Schaltstellung geschaltet. Für die kurze Dauer dieser zweiten Schaltstellung, in der die Ventile 16, 18, 21, 25 geöffnet und die Ventile 15, 17, 19, 22, 24, 26 geschlossen sind, wird das das Trägergas Tg in die Dosierschleife 3 umgeleitet und schiebt die darin enthaltenen Probenmenge in Form eines Probenpfropfes durch das geöffnete Ventil 18 in Richtung zu der ersten Trenneinrichtung 7. Durch eine zeitliche Steuerung der Ventile 15-19 der Reihenschaltung 20 kann die dosierte Probenmenge auf einen scharf begrenzten, beliebig kurzen Probenpfropf reduziert werden.

Zwischen den Ventilen 15-19 der ersten Reihenschaltung 20 sind ebenso wie auch zwischen den Ventilen der anderen Reihenschaltungen 23, 27 immer Fluidverbindungen vorhanden, die aus bautechnischen Gründen nicht beliebig kurz sein können. Diese Fluidverbindungen bilden Toträume beim Umschalten der jeweils vor und hinter ihnen liegenden Ventile. Um zu vermeiden, dass die Fluidverbindungen zwischen dem ersten und zweiten Ventil 15, 16 sowie zwischen dem vierten und fünften Ventil 18, 19 in der ersten Schaltstellung (Figur 1) der Mehrwegeventileinheit 14 von der Probe Pr durchströmt werden, so dass in der zweiten Schaltstellung (Figur 2) aus den jetzt Toträume bildenden Fluidverbindungen Probe in den Trägergasstrom eindiffundiert und so zu einer unscharfen Injektion der Probe in den Trägergasstrom führt, sind der Einlass 4 und Auslass 5 des Dosiervolumens 3 jeweils asymmetrisch an den Verbindungen zwischen dem ersten und zweiten Ventil 15, 16 bzw. dem vierten und fünften Ventil 18, 19 angeschlossen. Das heißt, der Einlass 4 des Dosiervolumens 3 liegt möglichst nahe an dem ersten Ventil 15 und der Auslass 5 des Dosiervolumens 3 möglichst nahe an dem fünften Ventil 19.

Zur Beendigung der Probendosierung in den Trägergasstrom werden die Ventile 15-19 der ersten Reihenschaltung 20 wieder umgeschaltet, so dass die Mehrwegeventileinheit 14 wieder die erste Schaltstellung (Figur 1) einnimmt. Während die aus dem technischen Prozess kommende Probe Pr wieder kontinuierlich durch das Dosiervolumen 3 fließt, fördert das Trägergas Tg jetzt den aus dem Dosiervolumen 3 entnommenen Probenpfropf durch die erste Trenneinrichtung 7, wobei die Probe in unterschiedliche Probenbestandteile zerlegt wird, welche am Ausgang der ersten Trenneinrichtung 7 nacheinander erscheinen und dort mit dem Detektor 8 detektiert werden. Probenbestandteile mit niedrigem Siedepunkt (Niedrigsieder wie z. B.

Stickstoff, Kohlenmonoxid, Schwefelwasserstoff, Kohlendioxid, Ethan), die aufgrund kurzer Aufenthaltszeiten (Retentionszeiten) in der ersten Trenneinrichtung 7 zuerst erscheinen und daher unzureichend voneinander getrennt sind, werden durch das geöffnete Ventil 25 in die zweite Trenneinrichtung 9 überführt, wo sie weiter aufgetrennt und anschließend mit dem Detektor 10 detektiert werden. Dementsprechend ist die zweite Trenneinrichtung 9 insbesondere für Niedrigsieder und die erste Trenneinrichtung 7 für Hochsieder (z. B. Propan, Butan und höhere Kohlenwasserstoffe) ausgelegt.

Da zum einen Hochsieder in der ersten Trenneinrichtung 7 bereits hinreichend getrennt werden und zum anderen ihre Durchlaufzeiten in der für Niedrigsieder ausgelegten zweiten Trenneinrichtung 9 sehr lang wären oder sie die zweite Trenneinrichtung 9 beschädigen können, sind sie von der zweiten Trenneinrichtung 9 fernzuhalten. Dazu wird die Mehrwegeventileinheit 14 durch Umschalten der Ventile 24, 25, 26 der dritten Reihenschaltung 27 in eine in Figur 3 gezeigte dritte Schaltstellung geschaltet, sobald die in der zweiten Trenneinrichtung 9 weiter aufzutrennenden Niedrigsieder das Ventil 25 passiert haben bzw. bevor der erste der in der ersten Trenneinrichtung 7 zu trennenden und anschließend zu detektierenden Hochsieder das Ventil 25 erreicht. In dieser dritten Schaltstellung sind die Ventile 15, 17, 19, 21, 24, 26 geöffnet und die Ventile 16, 18, 22, 25 geschlossen. Ein Teilstrom des Trägergases Tg gelangt jetzt über den Strömungswiderstand 28 und durch das geöffnete Ventil 24 in die zweite Trenneinrichtung 9, um die Niedrigsieder unterbrechungsfrei durch die zweite Trenneinrichtung 9 zu fördern. Der andere Teilstrom des Trägergases Tg fördert die Hochsieder weiterhin durch die erste Trenneinrichtung 7 und nach ihrer Detektion in dem Detektor 8 durch das geöffnete Ventil 26 und über den weiteren Strömungswiderstand 29 zu dem zweiten Gasauslass 12.

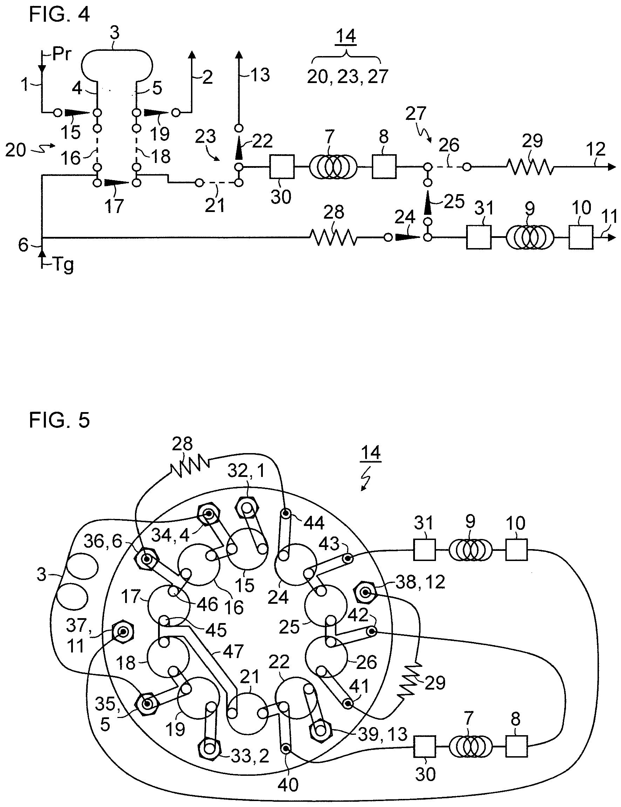

Nachdem ein vorgegebener Hochsieder (z. B. n-Pentan) am Ausgang der ersten Trenneinrichtung 7 durch den Detektor 8 detektiert worden ist, kann die Mehrwegeventileinheit 14 durch Umschalten der Ventile 21, 22 der zweiten Reihenschaltung 23 sowie durch Umschalten der Ventile 25, 26 der dritten Reihenschaltung 27 in eine in Figur 4 gezeigte vierte Schaltstellung geschaltet werden. In dieser vierten Schaltstellung sind die Ventile 15, 17, 19, 22, 24, 25 geöffnet und die Ventile 16, 18, 21, 26 geschlossen. Das über den Strömungswiderstand 28 und durch das geöffnete Ventil 24 fließende Trägergas Tg fördert weiterhin die Niedrigsieder durch die zweite Trenneinrichtung 9 und außerdem durch das geöffnete Ventil 24 die in der ersten Trenneinrichtung 7 verbliebenen Hochsieder (z. B. Hexan und höhere Kohlenwasserstoffe) zurück zu dem Detektor 30, wo sie in Summe detektiert und anschließend über den dritten Gasauslass 13 entsorgt werden. Durch Veränderung des Trägergasdruckes die Rückspül-(Backflush-)Prozedur verlangsamt oder beschleunigt werden, um z. B. die Nachweisgrenze zu erhöhen oder die Dauer des Chromatographie-Zyklus zu verkürzen.

Danach wird die Mehrwegeventileinheit 14 durch Umschalten der Ventile 15-19 der ersten Reihenschaltung 20, der Ventile 21, 22 der zweiten Reihenschaltung 23 und des Ventils 24 der dritten Reihenschaltung 27 wieder in die in Figur 1 gezeigte erste Schaltstellung geschaltet, so dass die erste Trenneinrichtung 7 mit den zugehörigen Detektoren 8, 30 und die zweite Trenneinrichtung 9 mit den zugehörigen Detektoren 10, 31 mit dem Trägergas Tg gespült werden.

Zusammengefasst nimmt die Mehrwegeventileinheit 14 in dem oben erläuterten Chromatographie-Zyklus nacheinander folgende Schaltstellungen ein:
- erste Schaltstellung (Figur 1),
- zweite Schaltstellung (Figur 2),
- erste Schaltstellung "geradeaus" (Figur 1),
- dritte Schaltstellung "Cut" (Figur 3),
- vierte Schaltstellung "Backflush" (Figur 4).

Es kann während eines Chromatographie-Zyklus auch nur eine Untermenge der oben genannten Schaltfunktionen bedient werden, wie z. B. nur "geradeaus" und "Backflush" ohne "Cut".

Die Strömungswiderstände 28, 29 dienen dazu, das System in den verschiedenen Schaltstellungen der Mehrwegeventileinheit 14 pneumatisch auszubalancieren. Ergänzend oder alternativ können auch die Trenneinrichtungen 7, 9 durch Ergänzungswiderstände und/oder der Trägergasdruck zur Ausbalancierung beitragen bzw. verwendet werden.

Die Figur 5 zeigt in schematischer Darstellung ein Beispiel für die Mehrwegeventileinheit 14 mit den daran angeschlossenen unterschiedlichen Komponenten des Gaschromatographen. Die zehn Ventile 15-19, 21, 22, 24-26 sind entlang eines Innenkreises angeordnet. Um diese herum sind auf einem Außenkreis externe Anschlüsse 32-39 für die Probenzuleitung 1, die Probenableitung 2, den Einlass 4 und Auslass 5 des Dosiervolumens 3, die Trägergaszuleitung 6 und die Gasauslässe 11, 12, 13 angeordnet. Weitere Anschlüsse 40-44 dienen zum Anschluss der ersten Trenneinrichtung 7 mit dem zugehörigen Detektor 30 an die Ventile 21, 22, des Strömungswiderstands 29 an das Ventil 26, der ersten Trenneinrichtung 7 mit dem zugehörigen Detektor 8 an die Ventile 25, 26, der zweiten Trenneinrichtung 9 mit dem zugehörigen Detektor 31 an die Ventile 24, 25 sowie des Strömungswiderstands 28 an das Ventil 24. Jedes Ventil, z. B. 17, weist zwei Fluidanschlüsse 45, 46 auf, an denen es über Fluidleitungen 47 mit benachbarten Ventilen und/oder externen Anschlüssen verbunden ist.

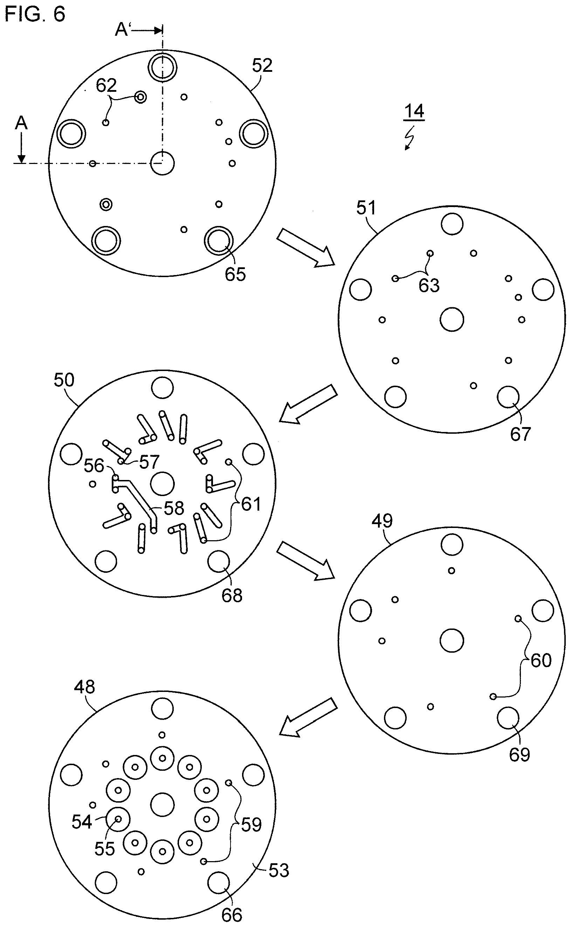

Im Folgenden wird anhand der Figuren 6, 7 und 8 der Aufbau der Mehrwegeventileinheit 14 näher erläutert. Bei dem gezeigten Ausführungsbeispiel besteht die Mehrwegeventileinheit 14 aus einem scheibenförmigen Unterteil 48, einer Membran 49, einer Steuerscheibe 50, einer optionalen Dichtungsfolie 51 (z. B. Polyimid) und einem scheibenförmigen Oberteil 52, die in dieser Reihenfolge aufeinander montiert sind.

Figur 6 zeigt die genannten Bestandteile der Mehrwegeventileinheit 14 einzeln in Draufsicht.

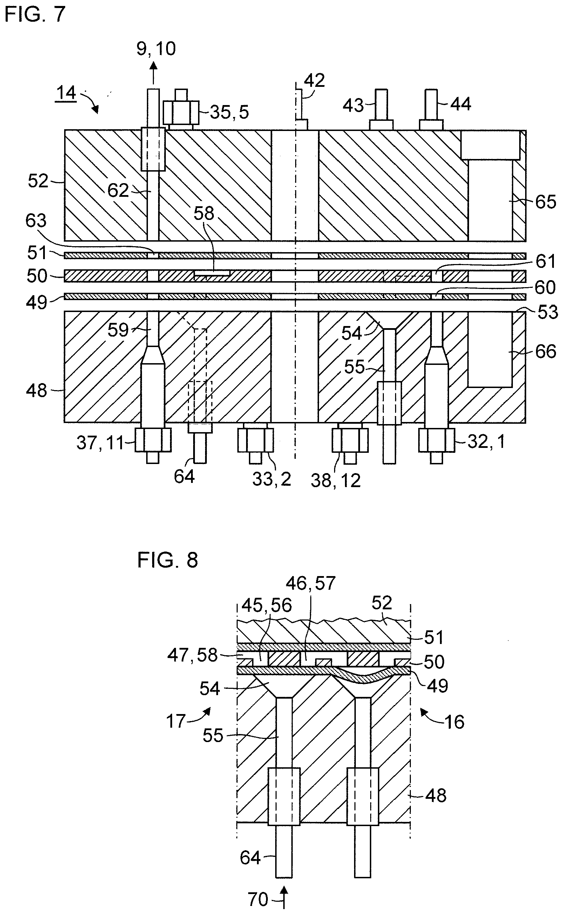

Figur 7 zeigt die Mehrwegeventileinheit 14 in einem Schnitt entlang der in Figur 6 angegebenen Linie AA', wobei aus Gründen der besseren Erkennbarkeit die Bestandteile voneinander getrennt dargestellt sind.

Figur 8 zeigt eine Einzelheit der Mehrwegeventileinheit 14 in einem Schnitt durch die Ventile 16 und 17.

Das scheibenförmige Unterteil 48 enthält in einer der Membran 49 zugewandten Außenfläche 53 für jedes der Ventile 15-19, 21, 22, 24-26 jeweils eine Mulde 54, in die über eine individuelle Steuerleitung 55 Steuerluft einleitbar ist. Die Membran 49 liegt zwischen dem Unterteil 48 und der Steuerscheibe 49, welche in den Mulden 54 gegenüberliegenden Bereichen jeweils ein Paar von Löchern 56, 57 enthält, wobei jedes Paar von Löchern 56, 57 die Fluidanschlüsse 45, 46 (Figur 5) jeweils eines der Ventile 15-19, 21, 22, 24-26 bildet. Auf ihrer von der Membran 48 abgewandten Seite enthält die Steuerscheibe 49 Rinnen 58, die bei aufliegender Dichtungsfolie 51 die Fluidleitungen 47 (Figur 5) bilden, welche die Fluidanschlüsse der jeweils in Reihe geschalteten Ventile miteinander verbinden und von ausgewählten Fluidanschlüssen nach außen zu vorgegebenen Stellen führen, von wo aus sie, wie später noch näher erläutert wird, mit den externen Anschlüssen 32-36, 39-44 verbunden sind. Die die Gasauslässe 11, 12 bildenden externen Anschlüsse 37, 38 dienen zum Anschluss der zweiten Trenneinrichtung 9 und zugehörigem Detektor 10 bzw. des Strömungswiderstands 29 und sind nicht mit durch Rinnen in der Steuerscheibe 49 gebildeten Fluidleitungen verbunden.

Die externen Anschlüsse 32, 33, 36, 37, 38, 39 für die Probenzuleitung 1, die Probenableitung 2, die Trägergaszuleitung 6 und die Gasauslässe 11, 12, 13 sind an der von der Membran 49 abgewandten Außenfläche des Unterteils 48 montiert. Dabei sind die Anschlüsse 36, 37, 38 zusätzlich durch die Mehrwegeventileinheit 14 hindurch bis auf die von der Membran 49 abgewandten Außenfläche des Oberteils 52 verlängert, um dort den Anschluss des Strömungswiderstands 28 an die Trägergaszuleitung 6, der zweiten Trenneinrichtung 9 mit zugehörigem Detektor 10 an den Gasauslass 11 sowie des Strömungswiderstands 29 an den Gasauslass 12 zu ermöglichen.

Die externen Anschlüsse 34, 35 für den Einlass 4 und Auslass 5 des Dosiervolumens 3 sind an der von der Membran 49 abgewandten Außenfläche des Oberteils 52 montiert. Dasselbe gilt für die Anschlüsse 40-44 zum Anschluss der ersten Trenneinrichtung 7 mit zugehörigem Detektor 30 an die Ventile 21, 22, des Strömungswiderstands 29 an das Ventil 26, der ersten Trenneinrichtung 7 mit dem zugehörigen Detektor 8 an die Ventile 25, 26, der zweiten Trenneinrichtung 9 mit dem zugehörigen Detektor 31 an die Ventile 24, 25 sowie des Strömungswiderstands 28 an das Ventil 24.

Die Verbindung zwischen den externen Anschlüssen 32-36, 39-44 und den Fluidleitungen 47 und die Verlängerung der Anschlüsse 36, 37, 38 aus dem Unterteil 48 in das Oberteil 52 und durch dieses hindurch erfolgt über Bohrungen 59 in dem Unterteil 48, die mit entsprechenden Löchern 60 in der Membran 49 und Löchern 61 in der Steuerscheibe 48 fluchten bzw. durch Bohrungen 62 in dem Oberteil 52, die mit entsprechenden Löchern 63 in der Dichtungsfolie 51 fluchten.

Die Steuerleitungen 55 weisen ebenfalls externe Anschlüsse 64 auf, die auf der von der Membran 49 abgewandten Außenfläche des Unterteils 48 montiert sind. Das Oberteil 52 und Unterteil 48 sind miteinander verschraubt, wozu die beiden Teile miteinander fluchtende Bohrungen 65, 66 aufweisen und die Dichtungsfolie 51, Steuerscheibe 50 und Membran 40 entsprechende Öffnungen 67, 68, 69 enthalten.

Figur 8 zeigt am Beispiel der Ventile 16 und 17 die Funktionsweise der Mehrwegeventileinheit 14. Bei Einleitung von Steuerluft 70 in die zu dem Ventil 16 gehörende Mulde 54 in dem Unterteil 48 verschließt die Membran 49 die gegenüberliegenden Löcher 56, 57 (Fluidanschlüsse 45, 46) in der Steuerscheibe 50, so dass das Ventil 16 geschlossen ist. Gleichzeitig weicht die Membran 49 im Bereich der zu dem Ventil 17 gehörenden Mulde bei nicht vorhandener Steuerluft unter Freigabe der ihr gegenüberliegenden Löcher zurück, so dass das Ventil 16 geöffnet ist.

Dadurch, dass die Fluidleitungen zur Verbindung benachbarter Ventile einer Reihenschaltung und zur Verbindung von Ventilen mit externen Anschlüssen durch Rinnen in einer vergleichsweise dünnen Steuerscheibe ausgebildet sind, lassen sich äußerst kurze Verbindungswege mit minimalen Totvolumina erzielen, die eine präzise Probendosierung und Trennsäulenumschaltung ermöglichen. Außerdem können allein durch Verwendung unterschiedlicher Steuerscheiben mit verschiedenen Fluidleitungsmustern unterschiedliche Konfigurationen der Mehrwegeventileinheit realisiert werden.

## Patentansprüche

1. Mehrwegeventileinheit für einen Gaschromatographen, die eine vorgegebenen Anzahl von Ventilen (15-19, 21, 22, 24-26) aufweist,
- mit einem scheibenförmigen Unterteil (48), bei dem in einer Außenfläche (53) für jedes der Ventile (15-19, 21, 22, 24-26) jeweils eine Mulde (54) ausgebildet ist, in die über eine individuelle Steuerleitung (55) Steuerluft (70) einleitbar ist,
- mit einer Membran (49), die mit einer Seite an der die Mulden (54) enthaltenden Außenfläche (53) des Unterteils (48) anliegt,
- mit einer Steuerscheibe (50), die an der anderen Seite der Membran (49) anliegt und
- in den den Mulden (54) gegenüberliegenden Bereichen jeweils ein Paar von Löchern (56, 57) enthält, wobei jedes Paar von Löchern (56, 57) Fluidanschlüsse (45, 46) jeweils eines der Ventile (15-19, 21, 22, 24-26) bildet, und
- auf ihrer von der Membran (49) abgewandten Seite Rinnen (58) enthält, die die Fluidanschlüsse (45, 46) von in Reihe geschalteten Ventilen miteinander verbinden und von ausgewählten Fluidanschlüssen zu vorgegebenen Stellen führen,
- mit einem scheibenförmigen Oberteil (52), das auf der die Rinnen (58) enthaltenden Seite der Steuerscheibe (50) unmittelbar oder unter Zwischenlage einer Dichtungsfolie (51) anliegt, und
- mit externen Anschlüssen (32-36, 39-44), die an den von der Membran (49) abgewandten Außenflächen des Oberteils (52) und/oder des Unterteils (48) montiert sind und über zu den zu vorgegebenen Stellen führende und senkrecht zu den Außenflächen (53) verlaufende Bohrungen (59, 62) mit den Rinnen (58) und über diese mit den Fluidanschlüssen (45, 46) verbunden sind.

2. Mehrwegeventileinheit nach Anspruch 1, **dadurch gekennzeichnet, dass** die Mulden (54) äquidistant entlang eines Innenkreises und die externen Anschlüsse (32-44) entlang eines Außenkreises angeordnet sind.

3. Gaschromatograph mit einer Mehrwegeventileinheit (14) nach Anspruch 1 oder 2, mit einer Probenzuleitung (1) und einer Probenableitung (2), einem Dosiervolumen (3) mit einem Einlass (4) und einem Auslass (5), einer Trägergaszuleitung (6), einer ersten Trenneinrichtung (7) mit einem nachgeschalteten ersten Detektor (8), einer zweiten Trenneinrichtung (9) mit einem nachgeschalteten zweiten Detektor (10), einem ersten, zweiten und dritten Gasauslass (11, 12, 13), und der Mehrwegeventileinheit (14) bestehend aus einem ersten Ventil (15), einem zweiten Ventil (16), einem dritten Ventil (17), einem vierten Ventil (18) und einem fünften Ventil (19) in einer ersten Reihenschaltung (20), einem sechsten Ventil (21) und einem siebten Ventil (22) in einer zweiten Reihenschaltung (23) und einem achten Ventil (24), einem neunten Ventil (25) und einem zehnten Ventil (26) in einer dritten Reihenschaltung (27), wobei
- die Probenzuleitung (1) an dem Anfang und die Probenableitung (2) an dem Ende der ersten Reihenschaltung (20) angeschlossen sind,
- der Einlass (4) des Dosiervolumens (3) an der Verbindung zwischen dem ersten und zweiten Ventil (15, 16) und sein Auslass (5) an der Verbindung zwischen dem vierten und fünften Ventil (18, 19) angeschlossen sind,
- die Trägergaszuleitung (6) an der Verbindung zwischen dem zweiten und dritten Ventil (16, 17) angeschlossen und mit dem Anfang der dritten Reihenschaltung (27) verbunden ist,
- das Ende der dritten Reihenschaltung (27) mit dem zweiten Gasauslass (12) verbunden ist,
- der Anfang der zweiten Reihenschaltung (23) an der Verbindung zwischen dem dritten und vierten Ventil (17, 18) und das Ende der zweiten Reihenschaltung (23) an dem dritten Gasauslass (13) angeschlossen sind,
- die erste Trenneinrichtung (7) mit dem ersten Detektor (8) zwischen der Verbindung zwischen dem sechsten und siebten Ventil (21, 22) und der Verbindung zwischen dem neunten und zehnten Ventil (25, 26) angeordnet ist, und
- die zweite Trenneinrichtung (9) mit dem zweiten Detektor (10) zwischen der Verbindung zwischen dem achten und neunten Ventil (24, 25) und dem ersten Gasauslass (11) angeordnet ist.

4. Gaschromatograph nach Anspruch 3, **dadurch gekennzeichnet, dass** zwischen der Trägergaszuleitung (6) und dem Anfang der dritten Reihenschaltung (27) ein Strömungswiderstand (28) liegt.

5. Gaschromatograph nach Anspruch 3 oder 4, **dadurch gekennzeichnet, dass** zwischen dem Ende der dritten Reihenschaltung (27) und dem zweiten Gasauslass (12) ein weiterer Strömungswiderstand (29) liegt.

6. Gaschromatograph nach einem der Ansprüche 3 bis 5, **dadurch gekennzeichnet, dass** der ersten und/oder zweiten Trenneinrichtung (7, 9) ein zusätzlicher Detektor (30, 31) unmittelbar vorgeschaltet ist.

7. Gaschromatograph nach einem der Ansprüche 3 bis 6, **dadurch gekennzeichnet, dass** der Einlass (4) des Dosiervolumens (3) asymmetrisch an der Verbindung zwischen dem ersten und zweiten Ventil (15, 16) angeschlossen ist, indem er näher zu dem ersten Ventil (15) liegt, und dass der Auslass (5) des Dosiervolumens (3) asymmetrisch an der Verbindung zwischen dem vierten und fünften Ventil (18, 19) angeschlossen ist, indem er näher zu dem fünften Ventil (19) liegt.

## Claims

1. Multiport valve unit for a gas chromatograph, having a prescribed number of valves (15-19, 21, 22, 24-26),
- with a lower part (48) in the form of a disk, where a recess (54) is in each case embodied in an outer surface (53) for each of the valves (15-19, 21, 22, 24-26), into which control air (70) can be introduced via an individual control line (55),
- with a diaphragm (49), which on one side abuts the outer surface (53) of the lower part (48) containing the recesses (54),
- with a control disk (50), which abuts the other side of the diaphragm (49) and
- contains in each case a pair of holes (56, 57) in the areas opposite the recesses (54), wherein each pair of holes (56, 57) forms fluid ports (45, 46) in each case of one of the valves (15-19, 21, 22, 24-26), and
- contains grooves (58) on its side facing away from the diaphragm (49), which connect the fluid ports (45, 46) of valves connected in series to each other or lead from selected fluid ports to prescribed locations,
- with an upper part (52) in the form of a disk, which immediately or with the interpositioning of a sealing foil (51), abuts the side of the control disk (50) containing the grooves (58), and
- with external ports (32-36, 39-44), which are mounted on the outer surfaces of the upper part (52) and/or of the lower part (48) facing away from the diaphragm (49) and are connected to the grooves (58) and via these to the fluid ports (45, 46) by means of drilled holes (59, 62) leading to the prescribed locations and running vertically to the outer surfaces (53).

2. Multiport valve unit according to claim 1, **characterised in that** the recesses (54) are arranged equidistantly along an inner circle and the external ports (32-44) along an outer circle.

3. Gas chromatograph with a multiport valve unit (14) according to claim 1 or 2, with a sample feed (1) and a sample vent (2), a metering chamber (3) with an inlet (4) and an outlet (5), a carrier gas feed (6), a first separating device (7) with a downstream first detector (8), a second separating device (9) with a downstream second detector (10), a first, second and third gas outlet (11, 12, 13), and the multiport valve unit (14) comprising a first valve (15), a second valve (16), a third valve (17), a fourth valve (18) and a fifth valve (19) in a first series circuit (20), a sixth valve (21) and a seventh valve (22) in a second series circuit (23) and an eighth valve (24), a ninth valve (25) and a tenth valve (26) in a third series circuit (27), wherein
- the sample feed (1) is attached to the start and the sample vent (2) to the end of the first series circuit (20),
- the inlet (4) of the metering chamber (3) is attached to the connection between the first and second valve (15, 16) and its outlet (5) to the connection between the fourth and fifth valve (18, 19),
- the carrier gas feed (6) is attached to the connection between the second and third valve (16, 17) and to the start of the third series circuit (27),
- the end of the third series circuit (27) is connected to the second gas outlet (12),
- the start of the second series circuit (23) is attached to the connection between the third and fourth valve (17, 18) and the end of the second series circuit (23) to the third gas outlet (13),
- the first separating device (7) with the first detector (8) is arranged between the connection between the sixth and seventh valve (21, 22) and the connection between the ninth and tenth valve (25, 26), and
- the second separating device (9) with the second detector (10) is arranged between the connection between the eighth and ninth valve (24, 25) and the first gas outlet (11).

4. Gas chromatograph according to claim 3, **characterised in that** a flow resistance (28) lies between the carrier gas feed (6) and the start of the third series circuit (27).

5. Gas chromatograph according to claim 3 or 4, **characterised in that** a further flow resistance (29) lies between the end of the third series circuit (27) and the second gas outlet (12).

6. Gas chromatograph according to one of claims 3 to 5, **characterised in that** an additional detector (30, 31) is connected immediately upstream of the first and/or second separating device (7, 9).

7. Gas chromatograph according to one of claims 3 to 6, **characterised in that** the inlet (4) of the metering chamber (3) is connected asymmetrically to the connection between the first and second valve (15, 16), while it lies nearer the first valve (15), and that the outlet (5) of the metering chamber (3) is connected asymmetrically to the connection between the fourth and fifth valve (18, 19), while it lies nearer to the fifth valve (19).

## Revendications

1. Unité de vanne à plusieurs voies d'un chromatographe en phase vapeur, qui a un nombre donné à l'avance de vannes (15 à 19, 21, 22, 24 à 26),
- comprenant une partie (48) inférieure, en forme de disque, dans laquelle il est constitué, dans une surface (53) extérieure, pour chacune des vannes (15 à 19, 21, 22, 24 à 26), respectivement, une cuvette (54), dans laquelle de l'air (70) de commande peut être introduit par un conduit (55) individuel de commande,
- comprenant une membrane (49), qui, par une face, s'applique à la surface (53) extérieure, comportant les cuvettes (54), de la partie (48) inférieure,
- comprenant un disque (50) de commande, qui s'applique à l'autre face de la membrane (49) et qui
- comporte, dans les parties opposées aux cuvettes (54) respectivement, une paire de trous (56, 57), chaque paire de trous (56, 57) formant des raccords (45, 46) pour du fluide, respectivement, de l'une des vannes (15 à 19, 21, 22, 24 à 26) et
- comporte, sur sa face loin de la membrane (49), des rainures (58), qui mettent en communication entre eux les raccords (45, 46) pour du fluide de vannes montées en série et conduisent du raccord pour du fluide sélectionnés à des points donnés à l'avance,
- comprenant une partie (52) supérieure en forme de disque, qui s'applique, directement ou avec interposition d'une feuille (51) d'étanchéité, à la face comportant les rainures (58) du disque (50) de commande et
- comprenant des raccords (32 à 36, 39 à 44) extérieurs, qui sont montés sur la surface extérieure, loin de la membrane (49) de la partie (52) supérieure et/ou de la partie (48) inférieure, et, par des trous (59, 62) menant aux points donnés à l'avance et s'étendant perpendiculairement aux surfaces (53) extérieures, communiquent avec les rainures (58) et, par celles-ci, avec des raccords (45, 46) pour du fluide.

2. Unité de vanne à plusieurs voies suivant la revendication 1, **caractérisée en ce que** les cuvettes (54) sont disposées de manière équidistante suivant un cercle intérieur et les raccords (32 à 44) extérieurs suivant un cercle extérieur.

3. Chromatographe en phase gazeuse, ayant une unité (14) de vanne à plusieurs voies suivant la revendication 1 ou 2, comprenant un conduit (1) d'entrée d'échantillon et un conduit (2) de sortie d'échantillon, un volume (3) de dosage ayant une entrée (4) et une sortie (5), un conduit (6) d'apport de gaz porteur d'un premier dispositif (7) de séparation, ayant un premier détecteur (8) en aval, un deuxième dispositif (9) de séparation, ayant un deuxième détecteur (10) en aval, une première, deuxième et troisième sortie (11, 12, 13) pour du gaz et l'unité (14) de vanne à plusieurs voies, constituée d'une première vanne (15), d'une deuxième vanne (16), d'une troisième vanne (17), d'une quatrième vanne (18) et d'une cinquième vanne (19) suivant un premier montage (20) en série, d'une sixième vanne (21) et d'une septième vanne (22) suivant un deuxième montage (23) en série et d'une huitième vanne (24), d'une neuvième vanne (25) et d'une dixième vanne (26) suivant un troisième montage (27) en série, dans lequel
- le conduit (1) d'entrée d'échantillon est raccordé au début et le conduit (2) de sortie d'échantillon à la fin du premier montage (20) en série,
- l'entrée (4) du volume (3) de dosage est raccordé à la liaison entre la première et la deuxième vannes (15, 16) et sa sortie (5) à la liaison entre la quatrième et la cinquième vannes (18, 19),
- le conduit (6) d'apport de gaz porteur est raccordé à la liaison entre la deuxième et la troisième vannes (16, 17) et communique avec le début du troisième montage (27) en série,
- la fin du troisième montage (27) en série communique avec la deuxième sortie (12) pour du gaz,
- le début du deuxième montage (23) en série est raccordé à la liaison entre la troisième et la quatrième vannes (17, 18) et la fin du deuxième montage (23) en série est raccordée à la sortie (13) pour du gaz,
- le premier dispositif (7) de séparation ayant le premier détecteur (8) est monté entre la liaison entre la sixième et la septième vannes (21, 22) et la liaison entre la neuvième et la dixième vannes (25, 26) et
- le deuxième dispositif (9) de séparation ayant le deuxième détecteur (10) est monté entre la liaison entre la huitième et la neuvième vannes (24, 25) et la première sortie (11) pour du gaz.

4. Chromatographe en phase gazeuse suivant la revendication 3, **caractérisé en ce qu'**il y a une résistance (28) à l'écoulement entre le conduit (6) d'apport de gaz porteur et le début du troisième montage (27) en série.

5. Chromatographe en phase gazeuse suivant la revendication 3 ou 4, **caractérisé en ce qu'**il y a une autre résistance (29) à l'écoulement entre la fin du troisième montage (27) en série et la deuxième sortie (22) pour du gaz.

6. Chromatographe en phase gazeuse suivant l'une des revendications 3 à 5, **caractérisé en ce qu'**un détecteur (30, 31) supplémentaire est monté directement en amont du premier et/ou du deuxième dispositif (7, 9) de séparation.

7. Chromatographe en phase gazeuse suivant l'une des revendications 3 à 6, **caractérisé en ce que** l'entrée (4) du volume (3) de dosage est raccordée dissymétriquement à la liaison entre la première et la deuxième vannes (15, 16), en étant plus près de la première vanne (15) et **en ce que** la sortie (5) du volume (3) de dosage est raccordée dissymétriquement à la liaison entre la première et la cinquième vannes (18, 19), en étant plus près de la cinquième vanne (19).
